# FASCICULE DE BREVET EUROPEEN

(11) **EP 3 340 489 B1**
(45) Date de publication et mention de la délivrance du brevet: **10.11.2021**
(21) Numéro de dépôt: 17208511.0
(22) Date de dépôt: 19.12.2017
(51) Int. Cl.: H04B 7/185, H04B 7/204

(54) **SYSTÈME ET PROCÉDÉ POUR LA TRANSMISSION DE DONNÉES DANS UN SYSTÈME SATELLITAIRE**
SYSTEM UND VERFAHREN ZUR ÜBERTRAGUNG VON DATEN IN EINEM SATELLITENSYSTEM
SYSTEM AND METHOD FOR DATA TRANSMISSION IN A SATELLITE SYSTEM

(30) Priorité: 20.12.2016 FR 1601806
(43) Date de publication de la demande: 27.06.2018
(73) Titulaire: Thales, 92400 Courbevoie (FR)
(72) Inventeur: BAUDOIN, Cédric, 31037 Toulouse (FR); SALLANTIN, Renaud, 31037 Toulouse (FR); ARNAL, Fabrice, 31270 Cugnaux (FR)
(74) Mandataire: Marks & Clerk France

(56) Documents cités:
- EP-A2- 0 987 840
- EP-A2- 1 284 458
- US-A- 6 151 497
- US-A1- 2003 033 355
- US-A1- 2005 210 121
- US-B1- 6 697 850
- Itu: "Report ITU-R S.2173 Multi-carrier based transmission techniques for satellite systems S Series Fixed-satellite service", , 31 juillet 2010 (2010-07-31), XP055412757, Extrait de l'Internet: URL:https://www.itu.int/dms_pub/itu-r/opb/ rep/R-REP-S.2173-2010-PDF-E.pdf [extrait le 2017-10-05]

## Description

L'invention concerne un système et un procédé utilisés notamment pour le transport de données vidéo dans des systèmes de télécommunication multi-spot par satellite.

Elle peut être utilisée dans toutes les installations utilisant un système satellitaire pour optimiser la transmission de données de type vidéo ou des données de taille équivalente.

Les services vidéo représentent une large majorité des contenus transportés par les infrastructures de type Internet, de l'ordre de 70 à 80%. En particulier, les services à la demande, notamment dans les architectures de service « Infra-service » plus connues sous l'abréviation anglo-saxonne OTT (over-the-top service) pour la vidéo à la demande ou sous l'abréviation VoD (Video on Demand), nécessitent à la fois des débits importants et une qualité de service garantie. Leur transmission dans le cas de satellite de diffusion multi-spot (broadcast services) pose donc le problème, d'une part de gâchis de la ressource qui est utilisée de nombreuses fois pour le même contenu, et d'autre part de limiter l'impact de la latence introduite par le satellite du fait des temps de transmission et des protocoles de communications mis en œuvre avec ces architectures de service OTT.

L'art antérieur décrit différents systèmes et méthodes pour optimiser le transport de ces données vidéo.

Une première famille de solution repose sur des architectures de cache mises en œuvre dans le segment sol utilisateurs. Ces architectures permettent d'améliorer grandement le transport et la qualité de service offerte pour ces contenus. Cependant, dans cette solution la présence de cache dans les terminaux satellites implique un surcoût important du segment sol utilisateur et des problématiques de maintenance et d'opérations. De plus, les caches installés du côté gateway, ne permettent pas de limiter le gâchis de ressources sur le segment satellite.

Une seconde famille est basée sur une architecture qui va traiter au niveau du satellite les données sur la voie aller (gateway vers utilisateur) et sur la voie retour (utilisateur vers gateway). Les données vont être démodulées/décodées et les flux de données résultants pris en charge par un processeur embarqué au niveau du satellite. Dans ce cadre, un cache est utilisé au niveau du satellite pour le stockage des données. La décision de cache, ainsi que l'accès à ces données, sont réalisés directement par le processeur bord, comme il est décrit par exemple dans le brevet US 6,697,850. Cette solution présente l'inconvénient de nécessiter la régénération de la voie retour, ce qui complexifie la charge utile du satellite et accroît notamment sa masse et donc son coût. Une solution alternative est décrite dans la demande de brevet US20030033355. Le principe décrit consiste à démoduler et décoder uniquement la voie aller pour réaliser une opération de décalage temporel. Cette solution ne convient donc pas au besoin de cache par objet relatif à l'accélération de la VoD. Dans ce cas, il n'y a pas d'accès à la demande, le flux vidéo (live) est monté une fois au satellite et redistribué vers tous les utilisateurs à un créneau horaire donné ; il n'y a pas de demande d'accès des utilisateurs, ni de contrôle de congestion et de reprise sur erreur.

Le brevet US 6 151 497 décrit un service de communication de données de diffusion par satellite dans lequel un fournisseur de services envoie un ensemble d'informations de données standard au réseau de communication par satellite, pour diffusion sur les liaisons descendantes haut débit à grande vitesse. Chaque unité abonné reçoit les informations de données standard diffusées, uniquement les parties pour lesquelles une unité dispose d'une autorisation d'accès.

La publication intitulée « Report ITU-R S.2173 Multi-carrier based transmission techniques for satellite systems S Series Fixed-satellite service » traite du problème de latence dans un réseau et ne se préoccupe pas de la bande passante.

Le brevet EP 1284458 divulgue l'utilisation d'une gateway pour la transmission d'une requête, cette dernière étant émise par un proxy cache du système.

Le système et le procédé selon l'invention reposent sur une nouvelle approche consistant notamment à utiliser de façon particulière, un cache au niveau du satellite associé à des proxies disposés au niveau des gateways au sol, la voie aller étant traitée au niveau du processeur du satellite, ce dernier étant considéré comme « transparent » pour la voie retour (i.e. le signal RF est simplement réamplifié, sans être traité numériquement) .

Le mot contenu est utilisé pour désigner les services, les données demandées par un utilisateur, etc.

Les utilisateurs accèdent à un contenu de la façon suivante. Un premier flux concerne l'envoi du contenu vidéo d'une gateway vers le satellite pour stockage au niveau du satellite. Lorsque les utilisateurs désirent accéder au contenu, ils envoient un flux de requête, jusqu'à la gateway, qui est ensuite redirigé vers le bord (satellite) pour être ensuite traité. Enfin, le satellite peut délivrer le contenu aux terminaux qui en ont fait la demande, voire à d'autres terminaux dans le même spot s'ils peuvent le stocker.

L'invention est exposée dans le jeu de revendications ci-joint.

D'autres caractéristiques et avantages de la présente invention apparaîtront mieux à la lecture de la description qui suit, donnée à titre illustratif et nullement limitatif, annexée des figures qui représentent :
- Figure 1, un exemple de schéma d'architecture système selon l'invention,
- Figure 2, un premier exemple d'enchaînement des étapes,
- Figure 3, une variante de la figure 2 avec un proxy HTTP à bord du satellite, et
- Figure 4, un exemple d'échanges de flux de données tenant compte de la perte possible de paquets au cours de la transmission.

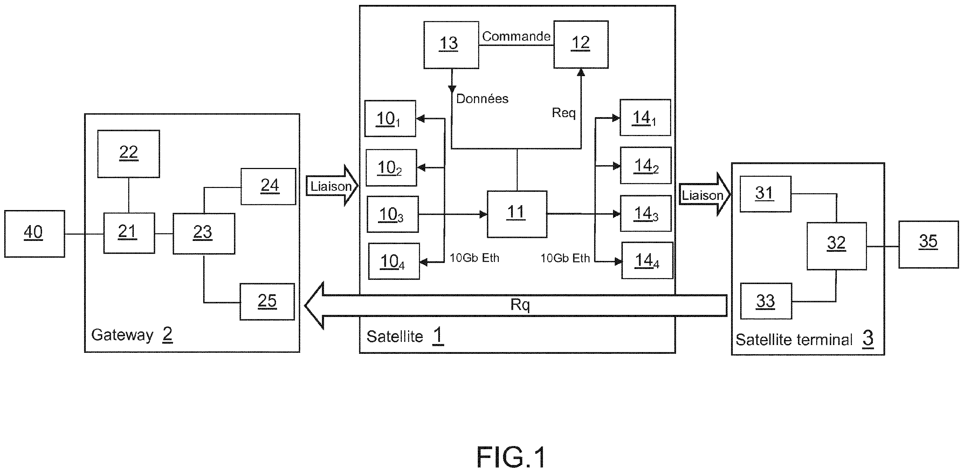

La figure 1 schématise un exemple d'architecture du système permettant la mise en œuvre du procédé selon l'invention, dans laquelle, pour des raisons de simplification, on a représenté une seule gateway et un seul terminal satellite pour expliciter l'invention, sachant que le système peut comporter plusieurs gateways et plusieurs utilisateurs.

Le satellite 1 comporte par exemple plusieurs modems recevant les flux de données transmis par une gateway 2. Les flux de données sont démodulés et décodés par des modems montants 10i, 10₂, 10₃, 10₄, avant d'être acheminés à un commutateur 11 qui les redirige vers un processeur 12. La signalisation est envoyée au processeur 12 pour traitement, les flux de données à stocker (à bord ou au sol sur les terminaux) sont acheminés vers un cache bord ou mémoire 13, ayant notamment pour fonction de mémoriser les données éligibles, i.e., le proxy va décider les données qui seront stockées à bord du satellite, en général en fonction du type de contenu et de sa popularité. Les flux de données à distribuer sont envoyés à un ensemble de modems descendants 14₁, 14₂, 14₃, 14₄, via le commutateur 11. La décision de stockage des données à bord du satellite est par exemple prise au niveau d'une gateway ou en amont afin de faciliter le traitement au niveau satellite (processeur et cache bord). La requête contient, par exemple, l'adresse IP source qui désigne soit la gateway elle-même, soit un serveur en amont géré par l'opérateur du système Satcom.

Sans sortir du cadre de l'invention, la décision de stockage peut aussi être prise en complément par le cache bord pour décider si le contenu des données reçu doit être stocké. Dans ce cas, une charge accrue de traitement devra être supposée.

Une gateway 2 comporte une entrée recevant les données ou flux de données transmis par voie Internet par un fournisseur 40 par exemple. Les données sont transmises à un commutateur 21 qui va les rediriger d'une part vers un serveur mandataire de cache plus connu sous le terme anglo-saxon « caching proxy » 22 et d'autre part vers un hub bande de base 23 qui regroupe les données. Le « caching proxy » comprend différentes fonctionnalités, notamment le stockage des objets, le contrôle des flux des données, la retransmission, etc. Les données sont transmises via un modem de transmission 24 vers la voie aller pour être distribuées au niveau des modems montants du satellite. Les données provenant directement d'un utilisateur sur la voie retour sont reçues par un deuxième modem 25 afin d'être démodulées et décodées, et traitées par la gateway. Le caching proxy possède notamment les fonctions principales suivantes :
- Décision de cache,
- Téléchargement ou Upload des contenus vers le cache bord,
- Redirection des flux,
- Contrôle de congestion.

Le terminal satellite utilisateur 3 comprend au moins un modem 31 démodulant et décodant les données reçues avant de les transmettre à un terminal bande de base 32, avant transmission vers les utilisateurs finaux 35, et un modem 33 qui permet de moduler et de coder les données avant leur transmission sur une voie de retour. La voie de retour permet le transfert des données vers la gateway 2. Dans le cas général, il y a plusieurs utilisateurs derrière le satellite. Lorsque plusieurs utilisateurs émettent une requête pour un même objet, le terminal satellite peut s'en apercevoir et ne pas transmettre à nouveau une copie de la requête.

La distribution des données peut être réalisée par une diffusion unicast ou multicast selon des étapes connues de l'homme du métier rappelées brièvement ci-après.

Pour la distribution unicast, les contenus sont préalablement envoyés à bord par une gateway sol, via un protocole assurant la fiabilisation des données, protocole connu de l'homme du métier, et notamment le protocole de transmission TCP (Transmission Control Protocol). Cet envoi est préférentiellement programmé lorsque le système est peu chargé, par exemple au cours de la nuit ou lors de périodes où les utilisateurs actifs sont peu nombreux. Ces contenus sont alors stockés à bord (cache du satellite). Dans un second temps, un terminal utilisateur demande l'accès à cette ressource. L'utilisateur envoie pour cela une requête Rq (contenu souhaité par un utilisateur) vers la gateway qui identifie la présence de ce contenu comme préalablement transmis au satellite. La gateway redirige ensuite cette requête Rq au satellite. Le satellite récupère cette requête, la traite et récupère dans son cache 13 le contenu des données demandé par un utilisateur qui est ensuite envoyé en mode unicast vers le terminal utilisateur.

Dans le cas d'une diffusion de type multicast où les terminaux disposent d'un cache, le contenu est envoyé par une gateway au satellite afin que ce dernier le distribue immédiatement ou qu'il le stocke dans son cache en utilisant un protocole fiable connu de l'homme du métier, par exemple TCP. Le contenu est ensuite dupliqué sur chacune des sorties concernées par ce contenu, par exemple l'ensemble des spots d'un pays, d'un même site, d'un même groupe, et le contenu est envoyé aux terminaux utilisateurs correspondants par une diffusion de groupe, par exemple avec le protocole internet IP comprenant une adresse de destination Multicast. Lors d'une demande utilisateur, le terminal utilisateur va vérifier si le contenu demandé n'est pas disponible en local dans son cache (cache du terminal). La requête ne sera envoyée vers la gateway qu'à la condition que le contenu n'ait pas été déjà diffusé et stocké localement. Cette solution multicast permet par exemple de charger préalablement les contenus ou flux de données les plus populaires dans le cache des terminaux utilisateurs équipés de cache.

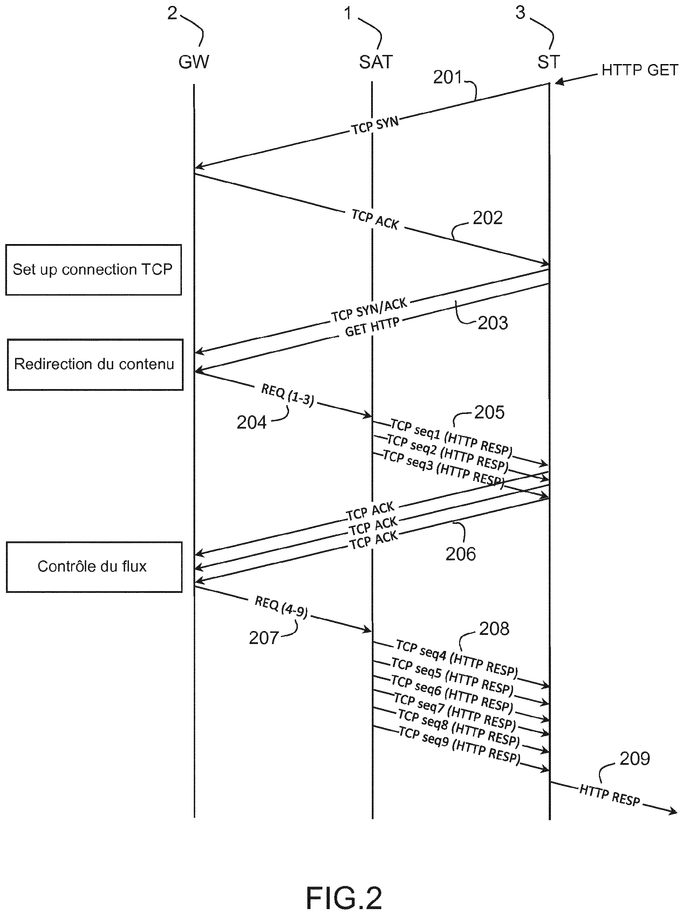

Les figures 2 à 4 font appel à des références identiques qui désignent les mêmes étapes.

La figure 2 illustre le flux des données et des requêtes selon une première variante de réalisation du procédé selon l'invention.

En faisant l'hypothèse que l'utilisateur souhaite avoir accès au contenu d'une page web ou obtenir ce contenu, l'utilisateur émet une requête Rq par exemple via un clavier ou tout autre moyen approprié. La requête Rq déclenche les étapes de configuration et de connexion de la communication, notamment une ouverture de session TCP SYN, 201, auprès de la gateway et un accusé réception TCP ACK, 202 de cette requête Rq par la gateway 2 auprès de l'utilisateur 3.

Le modem ne fait que récupérer les paquets. L'ouverture de connexion se fera par le proxy de cache. Au préalable, il y a une phase de redirection qui est mise en œuvre : l'utilisateur demande un contenu à un fournisseur (google par exemple) et le fournisseur ou le proxy va indiquer si le contenu préalablement chargé est disponible par l'intermédiaire du proxy. L'utilisateur va faire sa demande au proxy plutôt qu'au serveur initial. L'ensemble des mécanismes de redirection mis en œuvre dans les étapes est connu de l'homme du métier (DNS (Domaine Name System) ou HTTP redirect) et déjà mis en œuvre dans les caches qui se trouvent dans les réseaux terrestres. Le message TCP-SYN n'est pas démodulé/décodé mais transite par le satellite. Le message TCP-ACK transite aussi par le satellite.

La connexion étant ouverte, l'utilisateur demande une ressource, 203, GET HTTP, à la gateway. La demande de ressource est reçue par le modem 25 de la gateway qui démodule et décode la requête et la transmet au serveur mandataire de cache 22 de la gateway. Celui-ci vérifie que le contenu est bien disponible dans le cache bord du satellite. La gateway 2 après traitement du contenu de la requête de l'utilisateur Rq, transmet un ordre vers le satellite, 204, REQ({1-3}), lui indiquant les paquets de données contenus dans le cache bord 13 qui doivent être délivrés à l'utilisateur à l'origine de la requête. L'ordre est transmis via la voie aller vers l'un des modems montants du satellite. Il est ensuite orienté via le commutateur 11 vers le processeur 12 pour traitement du contenu. Le satellite 1 transmet les paquets de données demandés et contenus dans son cache 13 vers les modems descendants et vers l'utilisateur demandeur, 205, TCP seq1 (HTTP RESP), TCP seq2 (HTTP RESP), TCP seq3 (HTTP RESP). L'utilisateur va ensuite transmettre un acquittement de bonne réception des trois paquets dans cet exemple, vers la gateway, 206, TCP ACK. L'acquittement est reçu par une fonction de contrôle de flux de la gateway. Le contenu est en fait découpé en segments TCP et éventuellement en plusieurs objets HTTP. Pour transmettre l'ensemble du contenu il faudra transmettre l'ensemble des objets HTTP (donc à chaque fois demandé par l'utilisateur via un message GET) eux-même découpés en une succession de segments (paquets) TCP. Dans l'exemple donné, la seconde requête REQ({4-9}), 207, va permettre d'envoyer les segments TCP suivants pour ce même objet HTTP, TCP seq4 (HTTP RESP), ...., TCP seq9 (HTTP RESP), 208. Le terminal satellite peut finalement reconstruire le contenu des données HTTP RESP, 209. Si une seconde requête est émise par un autre utilisateur pour un même objet, le HTTP RESP peut lui être envoyé immédiatement avec l'objet.

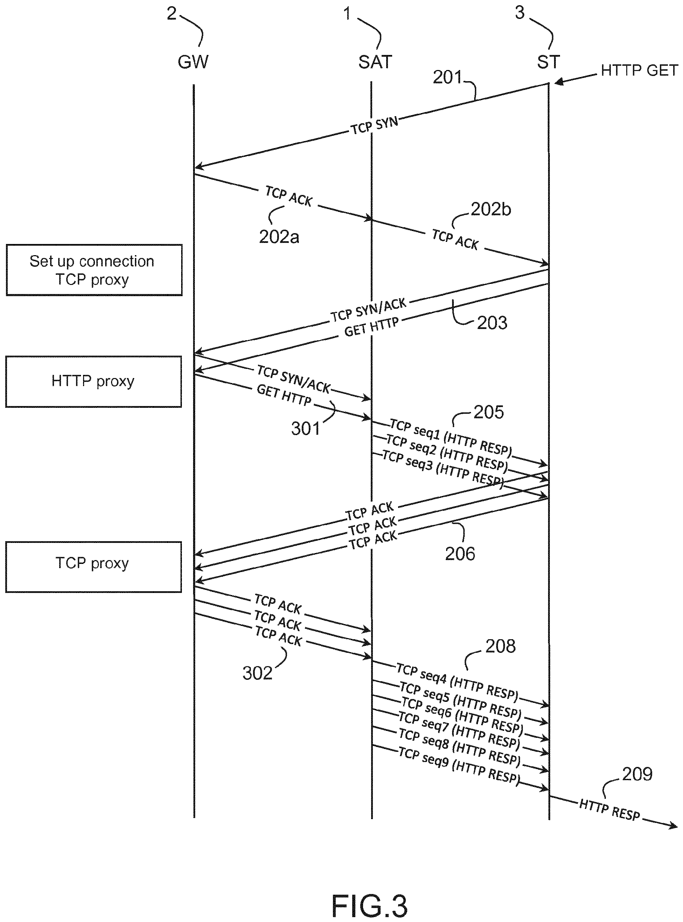

La figure 3 illustre une alternative des échanges de flux de données de la figure 2, qui met en œuvre un proxy HTTP et TCP dans la gateway pour la redirection des requêtes HTTP et des acquittements TCP assurant le contrôle de congestion et de retransmission. Dans cet exemple, le procédé transmet directement les ACK TCP, en général de l'ordre de 40 octets par segment acquitté. La signalisation REQ est adaptée pour spécifier en peu de place l'ensemble des segments à transmettre afin d'éviter un overhead.

Les premières étapes d'ouverture de session sont semblables à celles décrites à la figure 2. La connexion TCP est établie entre l'utilisateur et le satellite avec redirection par la gateway, TCP SYN, 202a, TCP ACK, 202b. La gateway 2 après traitement du contenu de la requête de l'utilisateur Rq, transmet un ordre vers le satellite, 301. Le satellite 1 transmet les paquets de données demandés et contenus dans son cache 13 vers les modems descendants 205 et vers l'utilisateur demandeur, TCP seq1 (HTTP RESP), TCP seq2 (HTTP RESP), TCP seq3 (HTTP RESP). Le terminal satellite va ensuite transmettre un acquittement de bonne réception des trois paquets, dans cet exemple vers la gateway, 206, TCP ACK. La gateway va ensuite réitérer la transmission des ACK TCP suivants 302 afin de transmettre les segments restants TCP seq4 (HTTP RESP), ....,TCP seq9 (HTTP RESP), 208. Le satellite peut reconstruire le contenu des données HTTP RESP, 209.

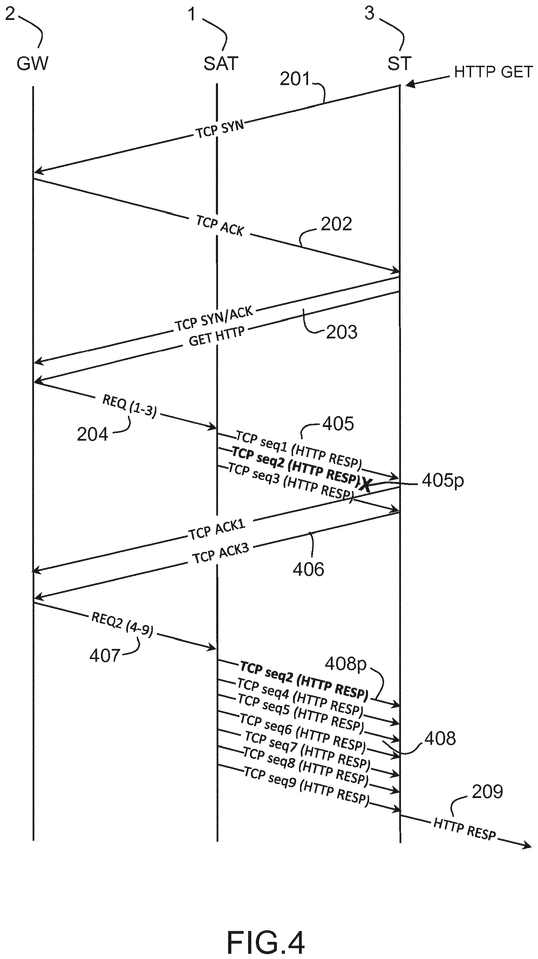

Le procédé selon l'invention permet aussi de retransmettre les données ou le contenu demandé par un utilisateur dans le cas d'une perte de paquets. La figure 4 illustre l'échange des flux de données et de requêtes.

Les premières étapes 201, 202 et 203 pour l'ouverture de session et la configuration du système sont identiques à celles décrites à la figure 2. La gateway transmet un ordre, 204, au satellite indiquant les contenus à transmettre du cache selon la requête de l'utilisateur, REQ({1-3}). L'utilisateur acquitte la réception 406 (TCP AKC1, TCP ACK3) de la transmission d'une partie du contenu reçu, 405, TCP seq1 (HTTP RESP), TCP seq3 (HTTP RESP), mais pas celle du contenu TCP seq2 (HTTP RESP), 405p qui n'a pas été reçu. Cette perte de paquets est détectée par le récepteur TCP de la gateway qui comprend un mécanisme intégré connu de l'homme du métier qui permet de détecter une rupture des numéros de séquence. La gateway va alors retransmettre en même temps que la seconde requête REQ({4-9}), une requête REQ(2) pour le contenu perdu lors de la transmission précédente du satellite vers les terminaux satellite. Le satellite transmettra le contenu, TCP seq4 (HTTP RESP), ....,TCP seq9 (HTTP RESP) 408, et TCP seq2 (HTTP RESP) 408p. Le satellite peut reconstruire le contenu des données HTTP RESP, 209.

Sans sortir du cadre de l'invention, le cache du satellite peut être intégré à un système de cache hiérarchique plus global où les autres caches sont présents dans la gateway et/ou dans les terminaux.

Le procédé et le système selon l'invention permettent notamment une distribution optimisée de contenus vidéo par exemple à la demande des utilisateurs en minimisant l'utilisation du lien feeder et la distribution des contenus à l'ensemble des terminaux pour un stockage local complémentaire.

L'ajout d'une fonction de cache bord dans un satellite multi-spot permet notamment :
1) de diminuer l'utilisation de la bande sur le lien montant gateway-satellite ou lien « feeder », un contenu n'est monté qu'une fois par une seule gateway (cette meilleure utilisation de la bande permet ainsi de diminuer éventuellement le nombre de GW). Par rapport à une solution de cache avec un satellite charge utile transparente, le gain en bande sur cette liaison équivaut au nombre d'accès successifs à ce contenu,
2) dans le cas de terminaux satellite sans cache :
   a) de diminuer le coût du segment sol,
   b) de réduire la latence pour ces services (équivalent à un cache localisé dans la gateway),
3) dans le cas de terminaux avec cache :
   a) d'améliorer le nombre de contenus cachés et/ou de diminuer la taille des caches sols en proposant un système de cache hiérarchique (contenus extrêmement populaires mis en cache dans le ST, très populaires mis en cache à bord du satellite),
   b) de réduire la latence / améliorer la qualité d'expérience pour l'accès aux contenus cachés localement dans les terminaux,
   c) de diminuer l'utilisation de la bande voie aller du segment utilisateur pour les contenus devant être stockés dans le terminal. Le gain résultant sera in fine lié au nombre d'accès successifs à ce contenu dans le spot.

## Revendications

1. Procédé pour la transmission de données dans un système satellitaire comprenant au moins un satellite (1) comprenant des capacités de démodulation/décodage, une « gateway » (2), ledit satellite étant adapté à traiter et à stocker dans un cache bord (13) des données utilisateurs, le système satellitaire comprenant au moins un terminal utilisateur (3) en lien radio avec la «gateway» (2) à travers le satellite (1), le procédé comportant au moins les étapes suivantes :
• Ouvrir (201, 202, 203) une session de communication TCP entre le terminal utilisateur (3) et la « gateway » (2),
• Transmettre une requête Rq (203) émise par un ou des utilisateurs finaux vers la « gateway » (2) par l'intermédiaire du terminal utilisateur (3) et du satellite (1), ladite requête Rq contenant une demande de données,
• Sur réception de la requête Rq (203) par la gateway (2), celle-ci vérifie que le contenu des données demandées est disponible dans un cache bord du satellite (1), et lorsque c'est le cas,émet un ordre (204, 207) vers le satellite (1), ledit ordre indiquant tout ou partie du contenu devant être délivré vers le terminal utilisateur,
• Transmettre (205, 208), à partir dudit satellite (1), ledit contenu au terminal utilisateur (3) à partir du cache bord en réponse à l'ordre (204, 207) délivré par la « gateway » (2),
• Le terminal utilisateur (3) acquitte réception (206, 208) d'au moins une partie ou de la totalité de dudit contenu à la « gateway » (2).

2. Procédé selon la revendication 1 **caractérisé en ce que** le contenu de données à transmettre est découpé en plusieurs segments et en cas de perte de paquets, l'utilisateur indique les paquets non reçus à la gateway (405p, 406) et la gateway réémet un ordre au satellite (407) lui demandant de retransmettre le ou les paquets perdus (408p) au cours de la séquence suivante de transmission de segments associé au même contenu (408).

3. Procédé selon l'une des revendications 1 ou 2 **caractérisé en ce que** la gateway utilise un proxy HTTP&TCP et la signalisation d'acquittement ACK TCP (202a, 202b) pour indiquer au satellite le contenu des données à transmettre à un utilisateur.

4. Procédé selon l'une des revendications 1 à 3 **caractérisé en ce que** le satellite distribue le contenu des données de manière unicast.

5. Procédé selon l'une des revendications 1 à 3 **caractérisé en ce que** le satellite distribue le contenu des données avec un protocole de distribution multicast des contenus les plus populaires vers les terminaux utilisateurs.

6. Système de transmission de données dans un système comprenant au moins un satellite (1) comprenant des moyens de démodulation (10i), une gateway (2) et au moins un terminal utilisateur (3), le système étant **caractérisé en ce que** le satellite (1), la gateway (2) et le terminal utilisateur (3) sont configurés pour exécuter les étapes du procédé selon l'une des revendications 1 à 5, et dans lequel :
• Le satellite (1) comporte un commutateur (11) recevant des flux de données démodulés et décodés, un processeur (12), et un cache bord (13) adapté à mémoriser des données utilisateurs dites éligibles par un proxy (22) situé dans la gateway (2),
• La gateway (2) comporte au moins ledit proxy (22) adapté à assurer la redirection, le contrôle et la retransmission du contenu demandé par un terminal utilisateur (3).

7. Système de transmission selon la revendication 6 **caractérisé en ce qu'**un terminal utilisateur (3) comporte un cache mémorisant les contenus les moins populaires.

8. Système de transmission selon l'une des revendications 6 ou 7 **caractérisé en ce qu'**une gateway (2) comporte un proxy de type HTTP&TCP.

## Patentansprüche

1. Verfahren zur Übertragung von Daten in einem Satellitensystem, umfassend mindestens einen Satelliten (1), welcher Demodulations-/Dekodierungskapazitäten und ein "Gateway"(2) umfasst, wobei der Satellit geeignet ist, um in einem Bord-Cache (13) Benutzerdaten zu bearbeiten und zu speichern, wobei das Satellitensystem mindestens ein Benutzerendgerät (3) in Funkverbindung mit dem "Gateway" (2) über den Satelliten (1) umfasst, wobei das Verfahren mindestens folgende Schritte umfasst:
• Öffnen (201, 202, 203) einer TCP-Kommunikationssitzung zwischen dem Benutzerendgerät (3) und dem "Gateway" (2),
• Übertragen einer Anforderung Rq (203), welche durch einen oder mehrere Endbenutzer an das "Gateway" (2) durch das Benutzerendgerät (3) und den Satellit (1) gesendet wird, wobei die Anforderung Rq eine Datenanfrage enthält,
• bei Empfang der Anforderung Rq (203) durch das Gateway (2) überprüft dieses, dass der Inhalt der erfragten Daten in einem Bord-Cache des Satelliten (1) verfügbar ist, und wenn dies der Fall ist, sendet es einen Befehl (204, 207) an den Satelliten (1), wobei der Befehl den gesamten oder einen Teil des Inhalts angibt, welcher an das Benutzerendgerät abgegeben werden soll,
• Übertragen (205, 208), ab dem Satelliten (1), des Inhaltes an das Benutzerendgerät (3) ab dem Board-Cache in Reaktion auf den durch das "Gateway" (2) abgegebenen Befehl (204, 207),
• das Benutzerendgerät (3) quittiert den Empfang (206, 208) mindestens eines Teils oder der Gesamtheit des Inhaltes gegenüber dem "Gateway" (2).

2. Verfahren nach Anspruch 1, **dadurch gekennzeichnet, dass** der Inhalt von zu übertragenden Daten in mehrere Segmente unterteilt wird und im Fall des Verlusts von Paketen der Benutzer die nicht am Gateway (405p, 406) empfangenen Pakete angibt und das Gateway erneut einen Befehl an den Satelliten (407) sendet, mit der Anfrage der erneuten Sendung des oder der verlorenen Pakete (408p) im Zuge der folgenden Übertragungssequenz von Segmenten in Zusammenhang mit demselben Inhalt (408).

3. Verfahren nach einem der Ansprüche 1 oder 2, **dadurch gekennzeichnet, dass** das Gateway einen HTTP&TCP-Proxy und die Quittierungs-Signalisierung ACK TCP (202a, 202b) verwendet, um dem Satelliten den Inhalt der an einen Benutzer zu übertragenden Daten anzugeben.

4. Verfahren nach einem der Ansprüche 1 bis 3, **dadurch gekennzeichnet, dass** der Satellit den Inhalt der Daten im Unicast-Modus verteilt.

5. Verfahren nach einem der Ansprüche 1 bis 3, **dadurch gekennzeichnet, dass** der Satellit den Inhalt der Daten mit einem Multicast-Verteilungsmodus der populärsten Inhalte an die Benutzerendgeräte verteilt.

6. System zur Übertragung von Daten in einem System, umfassend mindestens einen Satelliten (1), welcher Demodulationsmittel (10i), ein Gateway (2) und mindestens ein Benutzerendgerät (3) umfasst, wobei das System **dadurch gekennzeichnet ist, dass** der Satellit (1), das Gateway (2) und das Benutzerendgerät (3) konfiguriert sind, um die Schritte des Verfahrens nach einem der Ansprüche 1 bis 5 auszuführen, und wobei:
• der Satellit (1) einen Umschalter (11) umfasst, welcher demodulierte und dekodierte Datenflüsse empfängt, einen Prozessor (12) und einen Bord-Cache (13), welcher geeignet ist, um sogenannte für einen Proxy (22), welcher in dem Gateway (2) befindlich ist, infrage kommende Benutzerdaten zu speichern,
• das Gateway (2) mindestens den Proxy (22) aufweist, welcher zum Umleiten, zum Steuern und zum erneuten Übertragen des durch ein Benutzerendgerät (3) erbetenen Inhalts geeignet ist.

7. Übertragungssystem nach Anspruch 6, **dadurch gekennzeichnet, dass** ein Benutzerendgerät (3) einen Cache aufweist, welcher die am wenigsten populären Daten speichert.

8. Übertragungssystem nach einem der Ansprüche 6 oder 7, **dadurch gekennzeichnet, dass** ein Gateway (2) einen Proxy vom Typ HTTP&TCP umfasst.

## Claims

1. Method for transmitting data in a satellite system comprising at least one satellite (1) comprising demodulating/decoding capabilities, a gateway (2), said satellite being adapted to process and to store user data in an on-board cache (13), the satellite system comprising at least one user terminal (3) radio linked with the gateway (2) through the satellite (1), the method having at least the following steps:
• Opening (201, 202, 203) a TCP communication session between the user terminal (3) and the gateway (2),
• Transmitting a request Rq (203) sent by one or more end users to the gateway (2) through the user terminal (3) and the satellite (1), said request Rq containing a data request,
• Upon receipt of request Rq (203) by the gateway (2), the latter verifies that the content of the requested data is available in an on-board cache of the satellite (1), and if this is the case, issues an order (204, 207) for the satellite (1), said order indicating all or part of the content that is to be delivered to the user terminal,
• Transmitting (205, 208), from said satellite (1), said content to the user terminal (3) from the on-board cache in response to the order (204, 207) delivered by the gateway (2),
• The user terminal (3) acknowledges receipt (206, 208) of at least a part or all of said content to the gateway (2).

2. The method according to claim 1, **characterised in that** the data content to be transmitted is divided into several segments and, in the event of a loss of packets, the user indicates the packets that have not been received to the gateway (405p, 406), and the gateway resends an order to the satellite (407) requesting it to retransmit the lost packet(s) (408p) during the following transmission sequence of segments associated with the same content (408).

3. The method according to any one of claims 1 or 2, **characterised in that** the gateway uses an HTTP and TCP proxy and the acknowledgement signalling TCP ACK (202a, 202b) to indicate to the satellite the data content to be transmitted to a user.

4. The method according to any one of claims 1 to 3, **characterised in that** the satellite unicasts the data content.

5. The method according to one of claims 1 to 3, **characterised in that** the satellite distributes the data content using a protocol for multicast distribution of the most popular contents to the user terminals.

6. The system for transmitting data in a system comprising at least one satellite (1) comprising demodulating means (10i), a gateway (2) and at least one user terminal (3), the system being **characterised in that** the satellite (1), the gateway (2) and the user terminal (3) are configured to execute the steps of the method according to any of claims 1 to 5, and wherein:
• The satellite (1) has a switch (11) receiving decoded and demodulated data flows, a processor (12) and an on-board cache (13) adapted to store so-called eligible user data by way of a proxy (22) located in the gateway (2),
• The gateway (2) has at least said proxy (22) adapted to ensure the redirection, the control and the retransmission of the content requested by a user terminal (3).

7. The transmission system according to claim 6, **characterised in that** a user terminal (3) has a cache storing the least popular content.

8. The transmission system according to one of claims 6 or 7, **characterised in that** a gateway (2) has an HTTP&TCP proxy.
